# FASCICULE DE BREVET EUROPEEN

(11) **EP 1 364 547 B1**
(45) Date de publication et mention de la délivrance du brevet: **08.02.2006**
(21) Numéro de dépôt: 02708437.5
(22) Date de dépôt: 01.03.2002
(51) Int. Cl.: H04Q 7/38, H04Q 7/36

(54) **PROCEDE DE TRANSFERT INTERCELLULAIRE DANS UN SYSTEME DE RADIOCOMMUNICATIONS AVEC LES MOBILES**
VERFAHREN FÜR INTERZELLULARES WEITERREICHEN IN EINEM FUNKKOMMUNIKATIONSSYSTEM MIT MOBILEN TELEFONGERÄTEN
INTERCELLULAR HANDOVER METHOD IN A RADIOCOMMUNICATION SYSTEM WITH MOBILE TERMINALS

(30) Priorité: 01.03.2001 FR 0102816
(43) Date de publication de la demande: 26.11.2003
(73) Titulaire: Eads Telecom, 78180 Montigny Le Bretonneux (FR)
(72) Inventeur: MARQUE-PUCHEU, Gérard, F-78480 Verneuil (FR)
(74) Mandataire: Verdure, Stéphane
(86) Numéro de dépôt international: PCT/FR2002/000757
(87) Numéro de publication internationale: WO 2002/071784

(56) Documents cités:
- EP-A- 0 797 367
- EP-A- 0 876 005
- EP-A- 0 881 852
- EP-A- 1 047 276
- GB-A- 2 338 376
- US-A- 5 327 577
- US-A- 5 884 187
- US-A- 6 073 021

## Description

La présente invention concerne un procédé de transfert intercellulaire, un système de radiocommunications avec les mobiles le mettant en oeuvre ainsi qu'un équipement de commutation destiné à être utilisé dans un tel système.

Elle se rapporte au domaine des radiocommunications numériques avec les mobiles, et trouve des applications en particulier, dans les systèmes privés de radiocommunications professionnelles.

De tels systèmes sont en général des systèmes cellulaires, en ce sens qu'ils comprennent un sous-système radio (faisant partie du réseau fixe) comprenant des stations de base réparties sur la zone géographique couverte par le système, la zone couverte par une station de base respective étant appelée cellule. Les ressources radio disponibles (fréquences radio) sont réparties entre les différentes stations de base, pour assurer les communications avec des stations mobiles. Ceci permet de réutiliser les mêmes ressources radio dans des cellules non adjacentes, sans encourir de problèmes d'interférence entre les communications, et permet donc d'augmenter l'efficacité spectrale du système.

Lorsqu'une station mobile en communication se déplace d'une cellule déterminée, dite cellule d'origine, dans une cellule voisine, dite cellule de destination, il est nécessaire de transférer la communication sur une fréquence attribuée à ladite cellule de destination. Cette opération est bien connue dans les systèmes de radiocommunications cellulaires, et est communément appelée transfert intercellulaire (« Handover » ou « Handoff », en anglais).

Le transfert intercellulaire est commandé, soit à l'initiative de la station mobile, soit à celle du réseau fixe, en fonction d'une part, d'une première indication sur la qualité de la liaison radio entre la station mobile et la station de base de la cellule d'origine, et d'autre part, d'une seconde indication sur la qualité de la liaison radio entre la station mobile et la station de base de la cellule de destination. Ces indications sont mesurées par la station mobile. Dans le cas où le transfert intercellulaire est réalisé à l'initiative du réseau fixe, elles sont en outre transmises au réseau fixe via un canal de signalisation ad-hoc. Le réseau fixe commande le transfert intercellulaire lorsque la seconde indication devient meilleure que la première indication.

Afin d'éviter que le transfert intercellulaire intervienne trop tôt, ce qui risquerait de conduire à son échec, avec pour conséquence la perte possible de la communication, il est également connu de prévoir une hystérésis pour la comparaison entre la première indication et la seconde indication.

Des mesures, effectuées par la station mobile pour l'évaluation de la première et de la seconde indication interviennent pendant des intervalles de temps de scrutation, pendant lesquels la station mobile ne reçoit ni émet aucun signal lié à la communication en cours ou à de la signalisation. Ces mesures sont basées sur la scrutation de la fréquence balise de la cellule de destination. La première et la seconde indications sont évaluées, par le réseau fixe, en faisant une moyenne statistique sur plusieurs telles mesures.

En réalité, étant impossible de savoir a priori vers laquelle des cellules voisines de la cellule d'origine la station mobile se déplace, celle-ci scrute les fréquences balises d'une pluralité de cellules voisines, dont les références lui sont transmises par le réseau fixe via un canal de signalisation ad-hoc. On peut donc en fait parler d'une pluralité de secondes indications sur la qualité de la liaison radio entre la station mobile et la station de base de chaque cellule voisine respective.

Dans certains systèmes, les mesures pour l'évaluation de la première et des secondes indications (une seconde indication par cellule voisine considérée), sont effectuées avec une période relativement longue entre deux mesures consécutives, en raison de la faible récurrence des intervalles de temps de scrutation. Cela est par exemple le cas des systèmes FDMA, c'est-à-dire des systèmes à accès multiples par répartition de fréquences, ou des systèmes TDMA d'ordre faible, c'est-à-dire des systèmes à accès multiples par répartition de temps, par exemple d'ordre 2 (TDMA-2). Il s'ensuit que la décision de commander un transfert intercellulaire est prise par le réseau fixe à partir de mesures dont la valeur statistique est relativement faible. Il peut en résulter des décisions de transfert intercellulaire trop précoces ou trop tardives. Dans le premier cas, la communication risque d'être perdue. Dans le second cas, la station mobile risque de devenir une source d'interférence pour les communications établies sur la même fréquence dans d'autres cellules du réseau, et ce d'autant plus qu'un mécanisme de contrôle provoque une élévation de la puissance d'émission lorsque la station mobile s'éloigne de la station de base avec laquelle elle communique.

L'invention vise à pallier les inconvénients précités des systèmes de radiocommunications numériques avec les mobiles.

A cet effet, l'invention propose la mise en oeuvre d'une technique dite de transfert intercellulaire en douceur (« Soft Handover », en anglais). Cette technique a été familiarisée par les systèmes à accès multiples par répartition de codes (CDMA). Le principe de cette technique repose sur une absence de rupture de la communication lors du passage d'une cellule à une autre. Dans le cas des systèmes CDMA, où la même fréquence peut être utilisée dans deux cellules voisines, une réalisation du principe consiste à allouer dans deux cellules voisines le même code pour une communication donnée. Ceci permet à la station mobile d'être reçue, pendant toute la durée du changement de cellule, à la fois par la cellule d'origine et par la cellule de destination, et ainsi de passer en douceur de l'une à l'autre.

Des exemples d'application de la technique de transfert intercellulaire en douceur sont donnés dans les références US 6,073,021 et EP-A-O 797 367. Les techniques écrites dans ces documents ne s'appliquent toutefois qu'à des systèmes CDMA. Un autre exemple est décrit dans EP 964 595.

Les avantages de cette technique sont nombreux. En premier lieu, elle permet de minimiser les échecs lors des transferts intercellulaires, car à aucun moment ne se produit de modification brusque de la liaison radio et car, du fait de la disponibilité pendant la phase critique de deux liaisons radio dont les qualités s'ajoutent, les risques de mauvaise qualité de la liaison radio résultante diminuent de manière considérable. En second lieu, du fait que le transfert intercellulaire n'est pas irréversible pendant sa phase critique, la décision peut être prise plus tôt, alors que la qualité de la liaison avec la cellule d'origine est encore relativement correcte, évitant ainsi qu'une station mobile s'éloignant d'une cellule ne transmette à une trop forte puissance du fait de son éloignement de la station de base.

L'adaptation du principe à des systèmes autres que des systèmes CDMA, et en particulier au système GSM, a été proposée par exemple dans le document GB-A 2 338 376 (WO 99/65264). Le mécanisme normal de transfert intercellulaire proposé par le GSM (système TDMA d'ordre 8) étant d'un fonctionnement bien adapté au mode cellulaire normal, ce document propose une solution adaptée à des pico-cellules prévues dans les zones urbaines les plus denses. Un ensemble de pico-cellules constitue en fait une seule cellule au sens du système cellulaire considéré (ici le GSM), cette cellule disposant d'un canal de contrôle BCCH unique, émis en mode simulcast sur une fréquence particulière. Cette fréquence devant, selon la norme GSM, être émise en permanence, un certain nombre de canaux de trafic (en général sept puisque le canal BCCH occupe un seul intervalle de temps par trame sur une porteuse dans un système TDMA-8 comme le GSM) se trouvent également être émis en mode simulcast. Dès lors, une station mobile en communication sur un canal de trafic dédié à l'une des pico-cellules et dont la qualité de liaison baisse en dessous d'un certain seuil, subit un transfert interne à la cellule, dit transfert intracellulaire, l'amenant sur l'un des canaux de trafic en mode simulcast. Les indications sur la qualité des liaisons dans le sens montant sur ce canal, qui est émis et reçu par les différentes stations de base des pico-cellules, permettent de déterminer rapidement la pico-cellule vers laquelle le transfert doit être réalisé. Un second transfert interne à la cellule est alors réalisé vers cette pico-cellule, achevant le changement de pico-cellule.

Ce mécanisme, fondé sur un canal de contrôle dont la couverture est bien plus grande que les canaux de trafic auxquels il donne accès, ne s'applique qu'au cas des systèmes fonctionnant dans des environnements très denses et qui, nécessitant un fort taux de réutilisation des fréquences, possèdent un réseau de pico-cellules superposé au réseau de cellules.

Toutefois, ces pico-cellules ne sont pas des cellules au sens habituel du terme, puisqu'elles ne disposent pas d'un canal de contrôle propre. Ce mécanisme ne s'applique qu'à des systèmes TDMA de rang élevé car il faut un certain nombre de canaux de trafic sur la même fréquence que le canal de contrôle unique de la configuration, ce qui est impossible avec un système FDMA ou TDMA de rang faible, par exemple 2.

Il suppose en outre l'existence de canaux de trafic en mode simulcast ayant la même couverture que le canal de contrôle, ce qui s'obtient de manière naturelle dans le système GSM mais peut s'avérer plus difficile voire impossible à obtenir dans d'autres systèmes.

Le document US 5,278,991 propose une technique similaire dans laquelle une macro-cellule parapluie recouvre un certain nombre de micro-cellules. Cette technique diffère principalement de celle décrite dans le document cité précédemment par le fait que les micro-cellules sont d'authentiques cellules et possèdent chacune un canal balise (canal de contrôle BCCH) respectif. Néanmoins, elle ne s'applique également qu'à des systèmes multicouches, comprenant une couche de macro-cellules contiguës recouvrant une couche de micro-cellules non nécessairement contiguës.

Le document EP-A-O 876 005 divulgue une technique de transfert intercellulaire selon laquelle il existe des fréquences communes à toutes les cellules, sur l'une desquelles la station mobile émet pendant la procédure de transfert intercellulaire. La technique décrite nécessite toutefois que la station mobile change de fréquence pour émettre sur cette fréquence commune, préalablement à l'exécution du transfert intercellulaire. De plus, cette technique nécessite que des fréquences communes soient affectées en propre aux différentes stations de base pour l'exécution de la procédure de transfert intercellulaire. En outre, elle implique que les stations de base n'émettent pas sur la fréquence appairée à la fréquence commune de réception par les stations de base. Enfin, elle suppose que la liste des cellules impliquées dans la procédure de transfert intercellulaire est définie à l'avance.

La présente invention propose quant à elle un procédé de transfert intercellulaire adapté au cas des cellules de grandes dimensions, pour les réseaux en bande étroite qu'ils soient FDMA, ou TDMA d'ordre faible.

En effet, l'invention propose un procédé de transfert intercellulaire d'une communication entre une station mobile et un réseau fixe d'un système de radiocommunications cellulaire, notamment un système privé de radiocommunications professionnelles, permettant de transférer la communication depuis la station de base d'une cellule courante vers la station de base d'une cellule voisine, le procédé comprenant les étapes suivantes :
a) mesure, par la station mobile, d'une première indication relative à la qualité de la liaison radio entre la station mobile et la station de base de la cellule courante ;
b) scrutation, par la station mobile du canal balise d'au moins une cellule voisine et mesure correspondante d'une deuxième indication relative à la qualité de la liaison radio entre la station mobile et la station de base de ladite cellule voisine ;
c) transmission au réseau fixe, par la station mobile, des première et deuxième indications ;
d) première comparaison, par le réseau fixe, des première et deuxième indications pour en déduire, le cas échéant, au moins une cellule voisine éligible pour le transfert intercellulaire ;
e) allocation, par le réseau fixe, pour la communication dans la cellule éligible, d'un canal de trafic au moins dans le sens montant, établi sur la même fréquence et/ou le même intervalle de temps qu'un canal de trafic dans le sens montant qui est alloué à la communication dans la cellule courante ;
f) mesure, par le réseau fixe, d'une troisième indication relative à la qualité de la liaison radio entre la station mobile et la station de base de la cellule courante ;
g) mesure, par le réseau fixe, d'une quatrième indication relative à la qualité de la liaison radio entre la station mobile et la station de base de la cellule éligible ;
h) seconde comparaison, par le réseau fixe, des troisième et quatrième indications pour en déduire, le cas échéant, un ordre de transfert intercellulaire.

Le procédé permet de transférer la communication depuis la station de base de la cellule courante vers la station de base de la cellule voisine tout en maintenant la communication, en réduisant très sensiblement le risque de perdre la communication.

Avantageusement, la ou les cellules éligibles pour le transfert intercellulaire sont sélectionnées dynamiquement grâce aux étapes a) à d). Les cellules impliquées dans la procédure de transfert intercellulaire sont donc seulement celles qui sont éligibles c'est-à-dire susceptibles d'être élues pour le transfert. De plus, comme la station mobile continue à réaliser des mesures (étapes a) et b)) et à transmettre au réseau fixe (étape c)) le résultat de ces mesures pendant toute la procédure de transfert intercellulaire, la liste des cellules impliquées peut varier dynamiquement au cours de cette procédure.

Dans un premier mode de mise en oeuvre, le réseau établit une configuration de vote (« voting » en anglais) comprenant la cellule courante et les cellules éligibles. Dans ce cas, la station mobile continue d'émettre (et de recevoir) sur le canal qui était initialement alloué pour la communication dans la cellule courante.

Dans un second mode de mise en oeuvre, le réseau fixe établit une configuration dite « simulcast ». Dans ce cas, la station mobile effectue un « handover » vers un canal spécifique, porté par une fréquence réservée à cet effet dans toutes les cellules du système.

L'invention propose également un système de radiocommunications avec les mobiles, notamment un système privé de radiocommunications professionnelles, comprenant au moins une station mobile et un réseau fixe avec un sous-système réseau comprenant un équipement de commutation et un sous-système radio ayant une station de base par cellule, dans lequel la station mobile et l'équipement de commutation comprennent des moyens pour la mise en oeuvre du procédé.

L'invention propose également un équipement de commutation destiné à être utilisé dans un tel système.

D'autres caractéristiques et avantages de la présente invention apparaîtront encore à la lecture de la description qui va suivre. Celle-ci est purement illustrative et doit être lue en regard des dessins annexés, sur lesquels on a représenté :
- à la figure 1 : le schéma d'un système de radiocommunications numériques avec les mobiles selon l'invention ;
- à la figure 2 : un diagramme illustrant la structure de trame de messages transmis sur un canal physique de contrôle d'un système selon l'invention ;
- à la figure 3 : un diagramme illustrant la structure de trame de messages transmis sur des canaux physiques de trafic d'un système selon l'invention ;
- à la figure 4 : un organigramme illustrant une séquence d'étapes d'un procédé selon l'invention ;
- à la figure 5 : un schéma montrant différentes positions d'une station mobile lors d'un transfert intercellulaire ;
- à la figure 6 : un graphe montrant l'allure de la puissance radioélectrique reçue d'une station mobile par les stations de base de deux cellules voisines respectives lors d'un transfert intercellulaire ; et,
- à la figure 7 : un graphe illustrant la comparaison de l'allure de la puissance radioélectrique émise par une station mobile lors d'un transfert intercellulaire dans un système selon l'art antérieur ou selon l'invention.

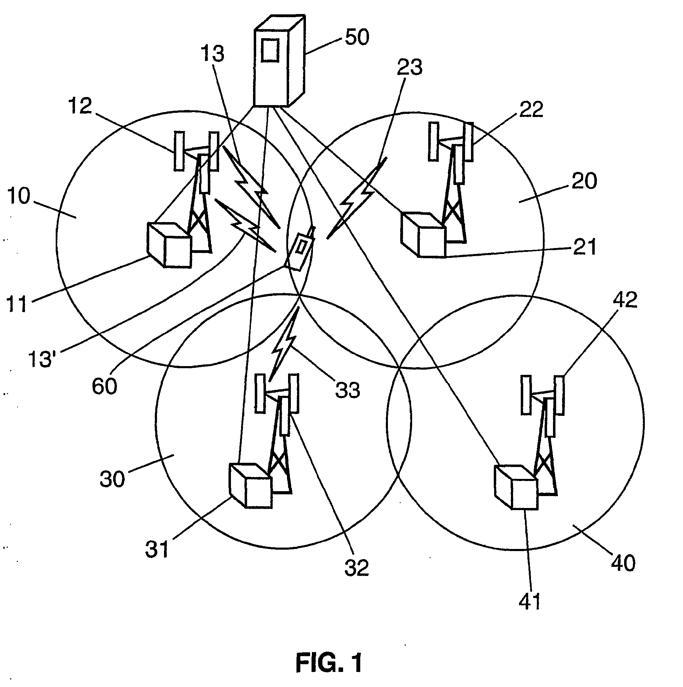

La figure 1 montre de manière schématique un système de radiocommunications avec les mobiles (système radiomobile) selon l'invention. Il s'agit par exemple d'un système privé de radiocommunications professionnelles, tels que ceux utilisés par la police ou les pompiers.

Le système comprend des stations mobiles telle que la station mobile 60, et un réseau d'équipements fixes (réseau fixe). Le réseau fixe comprend un sous-système réseau avec des équipements tels que des bases de données pour notamment la gestion de la localisation des stations mobiles, des commutateurs pour l'établissement des communications, des serveurs informatiques pour la fourniture de certains services aux utilisateurs, des serveurs passerelles pour assurer l'interface avec d'autres réseaux, etc. A la figure 1, seul un équipement de commutation 50 du sous-système réseau est représenté.

Le réseau fixe du système radiomobile comprend également un sous-système radio. Ce sous-système radio comprend un ensemble de stations de base réparties sur la zone géographique couverte par le système. A la figure 1, on a ainsi représenté quatre stations de base 11, 21, 31 et 41 chacune couplée à un dispositif d'antennes respectivement 12, 22, 32, et 42. La zone de couverture radio associée à chacune de ces stations de base forme une cellule respectivement 10, 20, 30 et 40 du système radiomobile. Ces cellules sont adjacentes et recouvrantes deux à deux.

Le système radiomobile est par exemple un système FDMA. Néanmoins, les avantages obtenus par l'invention sont également appréciables dans un système TDMA d'ordre faible, par exemple d'ordre 2 (Système TDMA-2).

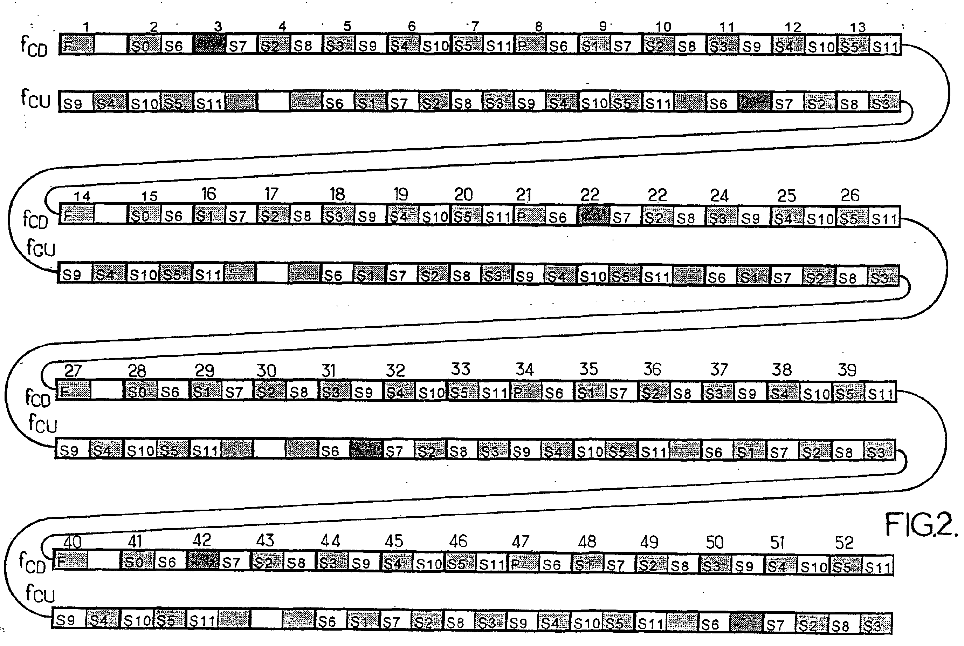

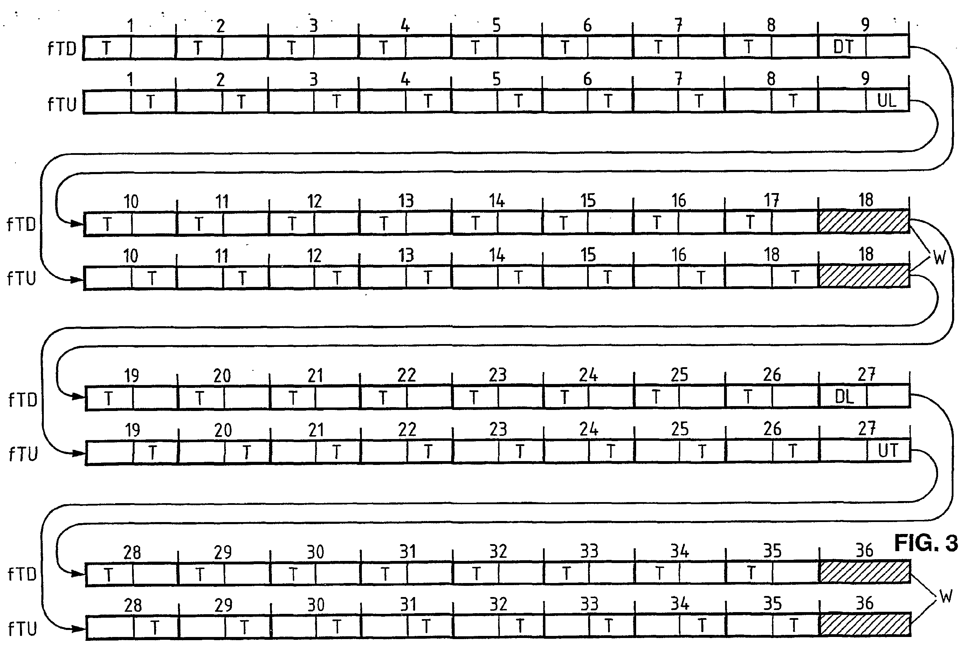

La figure 2 et la figure 3 sont des chronogrammes qui illustrent la structure de trame de messages transmis respectivement sur des canaux physiques de contrôle et sur des canaux physiques de trafic d'un système selon l'invention.

Pour chaque station de base est défini, sur une fréquence particulière, un canal physique descendant consacré à l'émission d'informations de contrôle de la station de base vers les stations mobiles, ou canal physique de contrôle descendant. Symétriquement, un canal physique montant, ou canal physique de contrôle montant, est défini sur une fréquence particulière pour la transmission d'informations de contrôle des stations mobiles vers la station de base. Ces canaux physiques de contrôle montant ou descendant sont subdivisés en canaux logiques de contrôle par multiplexage temporel. Certains de ces canaux logiques sont des canaux communs, partagés par toutes les stations mobiles se trouvant dans la zone de couverture de la station de base. D'autres sont des canaux logiques dédiés, que la station de base utilise pour communiquer avec des stations mobiles particulières.

A la figure 2, on a représenté en les juxtaposant selon la verticale, d'une part la structure de trame d'un message transmis sur le canal physique de contrôle montant établi sur une fréquence f_{CU} déterminée, et d'autre part, la structure de trame d'un message transmis sur le canal physique de contrôle descendant établi sur une fréquence f_{CD} déterminée. Chaque trame est divisée en quatre segments, qui sont représentés l'un au-dessus de l'autre à la figure 2. Chaque segment comprend vingt-six intervalles de temps élémentaires ayant chacun une durée d1, par exemple égale à 20 ms (millisecondes). Deux intervalles de temps élémentaires consécutifs forment un intervalle de temps composite ayant une durée d2 égale au double de la durée d1, soit 40 ms dans l'exemple. Chaque segment comprend donc 13 intervalles de temps composites. Sur la figure, les numéros représentés au-dessus de la trame correspondent aux numéros d'intervalles de temps composites.

Dans l'exemple illustré par la figure 2, les intervalles de temps élémentaires notés F, S0 et P du canal physique de contrôle descendant, se rapportent à des canaux logiques communs, alors que les intervalles de temps élémentaires notés Si (avec 1 ≤ i ≤ à 11) du canal physique de contrôle descendant et du canal physique de contrôle montant se rapportent à des canaux logiques dédiés, qui sont bidirectionnels.

Les intervalles F contiennent un motif de synchronisation formé par une séquence prédéterminée de bits, permettant de réaliser la synchronisation fréquentielle et temporelle des stations mobiles. Ils sont répétés quatre fois par trame.

Les intervalles de temps S0 contiennent des informations systèmes nécessaires à la coordination entre les stations mobiles et la station de base. Ils sont répétés quatre fois par trame.

Enfin, les intervalles de temps P forment un canal logique en diffusion PCH (Paging CHannel). Ils permettent à la station de base d'adresser des messages à des stations mobiles avec lesquelles elle n'est pas en train de communiquer (Paging), notamment des messages de réveil. Ils sont répétés quatre fois par trame.

Les intervalles de temps Si (2 ≤ i ≤ 11) des canaux logiques de contrôle dédiés, sont utilisés après une procédure d'attribution. Ils surviennent chacun huit fois par trame, à raison de deux fois par segment. La durée d'un segment de trame sur le canal physique de contrôle étant égale à 520 ms, un intervalle de temps Si, pour i donné, intervient en moyenne toutes les 240 ou 280 ms, avec une durée de 100 ms entre l'émission d'un message par la station de base sur un intervalle de temps Si du canal de contrôle descendant, et l'émission de la réponse par la station mobile sur le prochain intervalle de temps Si du canal de contrôle montant, et avec une durée égale à 140 ms ou 180 ms entre l'émission d'un message par la station mobile sur un intervalle de temps Si du canal de contrôle montant et l'émission de la réponse par la station de base sur le prochain intervalle de temps Si du canal de contrôle descendant.

Les intervalles de temps S1 sont également utilisés après une procédure d'attribution. Ils surviennent cinq fois par trame, à raison d'une fois dans chacun des premier, deuxième et quatrième segment, et de deux fois dans le troisième segment. Un intervalle de temps S1 intervient toutes les 240, 280 ou 520 ms.

La station de base peut en outre établir des canaux de trafic avec une ou plusieurs stations mobiles situées dans sa zone de couverture radio, après une procédure d'établissement d'appel effectuée au moyen d'un canal de contrôle dédié Si. Le canal de trafic établi avec une station mobile est descendant et/ou montant. Un canal de trafic est multiplexé, sur une fréquence déterminée, avec des canaux de signalisation associés servant à échanger de la signalisation en cours de communication.

Le chronogramme de la figure 3 illustre la structure de trame de messages échangés sur les canaux physiques de trafic. Sur cette figure, on a représenté en les juxtaposant selon la verticale, d'une part la structure de trame d'un message transmis sur un canal physique de trafic montant établi sur une fréquence f_{TU} déterminée, et d'autre part, la structure de trame d'un message transmis sur un canal physique de trafic descendant établi sur une fréquence f_{TD} déterminée. Une trame du canal physique de trafic est subdivisée en quatre segments, qui sont représentés l'un au-dessus de l'autre à la figure. Dit autrement, un segment correspond à un quart de trame. Chaque segment est composé de neuf intervalles de temps composites ayant chacun une durée d2 égale à 40 ms, comprenant chacun deux intervalles de temps élémentaires consécutifs, chacun de durée d1 égale à 20 ms. Sur la figure, les, numéros indiqués au-dessus de la trame correspondent aux numéros d'intervalles de temps composites.

Chacun des huit premiers intervalles de temps composites de chaque segment de la trame comporte un intervalle de temps élémentaire impair pour le sens descendant et un intervalle de temps élémentaire pair pour le sens montant, qui sont repérés par la lettre T. La suite récurrente de ces intervalles de temps T forme un canal logique de trafic, respectivement descendant et montant. En conséquence, sur le même canal physique de trafic descendant établi sur la fréquence f_{TD} déterminée, la station de base peut multiplexer, dans les intervalles de temps élémentaires pairs, un autre canal logique de trafic établi avec une autre station mobile.

Le neuvième intervalle de temps composite du premier segment et celui du troisième segment sont réservés à la transmission d'information de signalisation.

En particulier, sur le canal physique de trafic descendant, le neuvième intervalle de temps composite du premier segment comporte un intervalle de temps élémentaire impair noté DT (« Downlink Talker »), et celui du troisième segment comporte un intervalle de temps élémentaire impair noté DL (« Downlink Listener »). De même, sur le canal physique de trafic montant, le neuvième intervalle de temps composite du premier segment comporte un intervalle de temps élémentaire pair noté UL (« Uplink Listener »), et celui du troisième segment comporte un intervalle de temps élémentaire pair noté UT (« Uplink Talker »). La suite récurrente de ces intervalles de temps forme des canaux logiques de signalisation associés respectifs.

Le canal logique de signalisation associé DT permet à la station de base, lorsqu'elle est en train d'écouter ce qu'émet une station mobile sur la fréquence f_{TU}, de transmettre de la signalisation descendante. Cette signalisation descendante peut notamment se rapporter au contrôle de la puissance radioélectrique d'émission par la station mobile, en fonction de mesures de puissance effectuées par la station de base. Ce contrôle permet à la station mobile en phase d'émission de réguler sa puissance d'émission de manière à limiter les interférences dans le réseau.

Le canal logique de signalisation associé DL permet à la station de base, lorsqu'elle est en train d'émettre vers une station mobile sur la fréquence f_{TD}, de transmettre de la signalisation descendante. Celle-ci peut notamment se rapporter à l'identification des cellules voisines, afin de préparer les transferts intercellulaires.

Le canal logique de signalisation associé UL permet à la station mobile, lorsqu'elle est en train d'écouter ce qu'émet la station de base sur la fréquence f_{TD}, de transmettre de la signalisation montante. Celle-ci peut notamment se rapporter à des mesures de la puissance reçue à la fréquence balise des cellules voisines, afin de préparer les transferts intercellulaires.

Enfin, le canal logique de signalisation UT permet à la station mobile, lorsqu'elle est en train d'émettre vers la station de base sur la fréquence f_{TU}, de transmettre de la signalisation montante. Cette signalisation montante peut également se rapporter à la transmission de mesures de la puissance reçue à la fréquence balise des cellules voisines en vue des transferts intercellulaires.

Bien entendu, les différents éléments de signalisation échangés sur les canaux DT, DL, UL et UT ne sont pas limités à ceux cités ci-dessus.

Le neuvième intervalle de temps composite du deuxième et du quatrième segment de la trame est inoccupé. Ces intervalles de temps inoccupés, qui sont hachurés sur la figure 3, constituent des fenêtres de scrutation W pendant lesquelles la station mobile peut changer de fréquence pour mesurer la puissance reçue à la fréquence du canal balise (canal BCCH) d'une cellule voisine.

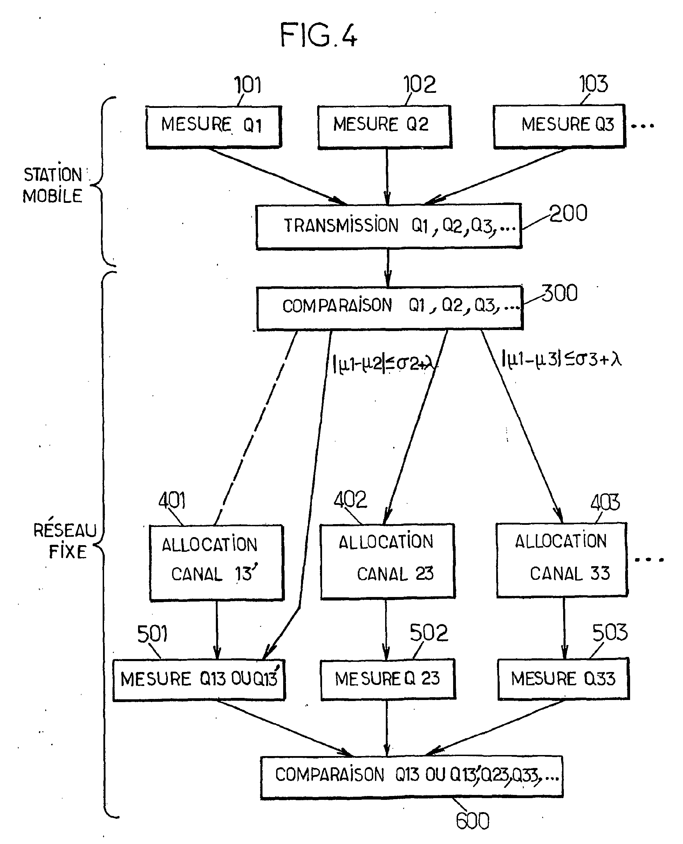

A la figure 4, on a représenté un organigramme des étapes d'un procédé selon l'invention, en distinguant, en partie supérieure les étapes mises en oeuvre par la station mobile, et en partie inférieure celles mises en oeuvre par le réseau fixe.

Initialement, un canal de trafic 13 déterminé (figure 1) est alloué, dans le sens montant et dans le sens descendant, à la communication dans une cellule courante. Par exemple, il s'agit de la cellule 10, couverte par la station de base 11.

Dans une étape 101, le terminal mobile mesure une indication Q1 relative à la qualité de la liaison radio entre la station mobile 60 et la station de base 11 de la cellule courante 10. Plus particulièrement, il mesure une série de valeurs Q1ᵢ pendant au moins certains des intervalles de temps pendant lesquels il reçoit un signal de la station de base 11 dont une moyenne constitue l'indication Q1. Il peut s'agir d'intervalles de temps du canal physique de trafic qui porte le canal 13 lorsque la station mobile est en réception, et/ou d'intervalles de temps du canal physique de contrôle dans tous les cas. Ces intervalles de temps étant en nombre substantiel, les valeurs Q1ᵢ sont relativement nombreuses et leur moyenne présente donc une valeur statistique relativement bonne.

Dans une étape 102, la station mobile scrute le canal balise (canal BCCH) de la cellule voisine 20 et mesure une indication Q2 relative à la qualité de la liaison radio entre la station mobile et la station de base 21 de cette cellule voisine 20. Cette scrutation intervient pendant les fenêtres de scrutation W du canal physique de trafic qui porte le canal 13, visibles à la figure 3. Plus exactement, la station mobile produit une suite de valeurs Q2ᵢ, par exemple une valeur par fenêtre de scrutation, dont une moyenne constitue l'indication Q2. En général, la station mobile scrute successivement, dans des fenêtres W respectives, le canal balise de chacune des cellules voisines. Elle mesure ainsi une indication relative à la qualité de la liaison radio entre la station mobile et la station de base respective de chacune de ces autres cellules voisines. Ainsi, par exemple, dans une étape 103, elle scrute le canal BCCH de la cellule 30, et mesure une indication Q3 relative à la qualité de la liaison radio avec la station de base 31 de la cellule 30. Les références des cellules voisines concernées lui sont transmises par le réseau fixe, et en particulier la station de base 11, via l'un des canaux de signalisation associé DT ou DL, selon qu'elle se trouve respectivement en phase d'émission ou en phase de réception.

Les indications relatives à la qualité d'une liaison radio déterminée sont par exemple constituées par un taux d'erreurs sur les trames ou TET (en anglais, « Frame Error Rate » ou FER). D'autres indications sont naturellement envisageables, par exemple un taux d'erreurs sur les bits ou TEB (en anglais, « Bit Error Rate » ou BER), ou tout simplement un niveau de puissance reçu.

Les indications Q2, Q3, ..., comme d'ailleurs l'indication Q1, sont déterminées à partir d'une moyenne effectuée sur un certain nombre de mesures respectivement Q1ᵢ, Q2ᵢ, Q3ᵢ, ... Or, compte tenu de la faible récurrence des fenêtres de scrutation W, et du nombre de cellules voisines dont les canaux BCCH respectifs doivent être scrutés, chacun pendant une fenêtre de scrutation W déterminée, les mesures Q2ᵢ, Q3ᵢ, ... sont en nombre relativement limité. Par conséquent, leur moyenne présente une faible valeur statistique. Dit autrement, les indications Q2, Q3, ... sont affectées d'une incertitude qui provient du faible nombre de mesures respectivement Q2ᵢ, Q3ᵢ, ... qui sont effectuées et prises en compte dans le calcul de la moyenne. En outre, cette incertitude dépend de la vitesse de déplacement de la station mobile 60. En pratique, on a constaté que, à la vitesse d'un piéton, la valeur d'une indication ainsi obtenue peut s'écarter d'une dizaine de décibels de la valeur moyenne réelle. C'est pour cette raison que, selon l'invention, ces indications Q2, Q3, ... ne sont pas directement prises en compte pour la commande d'un transfert intercellulaire.

Dans une étape 200, la station mobile 60 transmet les indications Q1, Q2, Q3, ... au réseau fixe. Dans un mode de réalisation préféré, ce sont plus particulièrement les mesures Q1ᵢ, Q2ᵢ, Q3ᵢ, ...qui sont transmises, dont une moyenne est ensuite calculée au niveau du réseau fixe. Néanmoins, ce calcul peut aussi être effectué au niveau de la station mobile, une valeur moyenne ainsi qu'un écart-type associés à chacune des indications Q1, Q2, Q3, ... étant alors transmises lors de cette étape 200. Ces transmissions ont lieu via les canaux de signalisation associés UL ou UT, selon que la station mobile est respectivement en phase de réception ou en phase d'émission.

Dans une étape 300, le réseau fixe compare les indications Q1, Q2, Q3, ... Mais, comme il va être expliqué ci-dessous, la décision de commander un éventuel transfert intercellulaire n'est pas prise par le réseau fixe directement à partir du résultat de cette comparaison.

Comme il a été dit plus haut, les indications Q1, Q2, Q3, ... sont des indications à valeur statistique, résultat du calcul d'une moyenne sur un certain nombre de mesures. Avant de préciser le détail de la comparaison effectuée lors de l'étape 300, il convient d'exposer une méthode de calcul de cette moyenne, qui est donné à titre d'exemple uniquement. En faisant l'hypothèse que la suite des valeurs Q1ᵢ est la réalisation d'un processus aléatoire obéissant à une fonction de densité normale, l'indication Q1 peut être déterminée par une moyenne µ1 et un écart-type σ1. En faisant les mêmes hypothèses pour la suite des mesures Q1ᵢ et Q3ᵢ, les indications Q2 et Q3 peuvent être déterminées par une moyenne respectivement µ2 et µ3, et par un écart-type σ2 et σ3 respectivement.

L'étape de comparaison 300 consiste à déterminer si une ou plusieurs des cellules adjacentes sont éligibles pour un transfert intercellulaire. En ce qui concerne la cellule adjacente 20, l'étape 3 comporte ainsi les implications suivantes :
- si la moyenne µ2 de l'indication Q2 est meilleure que la moyenne µ1 de l'indication Q1 et si la différence entre ces deux moyennes est supérieure à l'écart-type σ2 de l'indication Q2 augmenté d'une valeur d'hystérésis λ, alors le réseau fixe décide que la liaison radio entre la station mobile 60 et la station de base 21 de la cellule adjacente 20 est meilleure que la liaison radio entre la station mobile 60 et la station de base 11 de la cellule courante 10. Dans ces conditions, le réseau fixe peut commander un transfert intercellulaire au profit de la cellule adjacente 20. Cette commande est alors transmise par la station de base 11 et le transfert intercellulaire est réalisé de manière tout à fait classique, avec un risque d'échec faible ;
- si à l'inverse la moyenne µ1 de l'indication Q1 est meilleure que la moyenne µ2 de l'indication Q2, et si la différence entre les moyennes µ1 et µ2 est supérieure à l'écart-type σ2 de l'indication Q2 augmenté de la valeur d'hystérésis λ, alors le réseau fixe décide que la liaison radio entre la station mobile 60 et la station de base 11 de la cellule courante 10 reste meilleure que la liaison radio entre la station mobile 60 et la station de base 21 de la cellule adjacente 20. Par conséquent, le réseau fixe en déduit qu'aucun transfert intercellulaire ne doit intervenir au profit de la cellule adjacente 20 ;
- dans le cas intermédiaire, c'est-à-dire lorsque la différence entre les valeurs moyennes µ1 et µ2 est inférieure ou égale à l'écart-type σ2 augmenté de la valeur d'hystérésis λ (c'est-à-dire lorsque | µ1 - µ2 | ≤ σ2 + λ), alors le réseau fixe ne prend aucune décision. Dans ce cas, dans une étape 402, le réseau fixe alloue un canal de trafic 23 pour la communication dans la cellule adjacente 20. Lorsque la relation ci-dessus est vérifiée, on dit que la cellule adjacente 20 est éligible pour un transfert intercellulaire.

L'étape de comparaison 300 comporte également des implications similaires en ce qui concerne l'indication Q3 pour la cellule adjacente 30, pouvant le cas échéant (i.e. si la cellule 30 est éligible) mener, lors d'une étape 403 à l'allocation d'un canal de trafic 33 pour la communication dans la cellule adjacente 30. De façon générale, l'étape de comparaison 300 comporte de telles implications pour toutes les autres cellules adjacentes. Le cas échéant, c'est-à-dire si la cellule adjacente considérée est éligible au sens indiqué plus haut, le réseau fixe alloue un canal de trafic pour la communication dans ladite cellule.

Dans un premier mode de réalisation de l'invention, les canaux de trafic tels que 23 et 33 sont alloués dans le sens montant uniquement. En outre, ils sont alloués sur la même fréquence que le canal de trafic 13 pour la communication entre la station mobile 60 et la station de base 11 de la cellule courante 10 (dans le cas d'un système FDMA) et/ou sur le même intervalle de temps (dans le cas d'un système TDMA). On obtient ainsi une configuration particulière du plan de fréquence, qui correspond à celle que l'on rencontre pour la mise en oeuvre d'un mécanisme de vote (« voting », en anglais) dans les systèmes privés de radiocommunications professionnelles. Pour cette raison, cette configuration est appelée configuration « de vote » dans la suite.

Dans une étape 501, le réseau fixe mesure ensuite une indication Q13 relative à la qualité de la liaison radio entre la station mobile 60 et la station de base 11 de la cellule courante 10. De même, dans des étapes 502 et/ou 503, il mesure des indications respectivement Q23 et/ou Q33 relatives à la qualité de la liaison radio entre la station mobile 60, d'une part, et la station de base 21 de la cellule éligible 20 et/ou la station de base 31 de la cellule éligible 30, respectivement, d'autre part. Plus particulièrement, les indications Q13, Q23, Q33, ... sont obtenues en faisant la moyenne de mesures respectivement Q13ᵢ, Q23 ᵢ, Q33 ᵢ, ... De telles mesures peuvent être en nombre relativement important en sorte que la valeur statistique des indications Q13, Q23, Q33, ... est bonne.

Les indications Q13, Q23, Q33, ... peuvent être un TET, un TEB et/ou un niveau de puissance reçu.

Dans une étape de comparaison 600, le réseau fixe compare alors l'indication Q13 avec l'indication relative à la qualité de la liaison radio entre la station mobile 60 et la station de base de chacune des cellules éligibles, c'est-à-dire, dans l'exemple, les indications Q13 et Q23 d'une part et les indications Q13 et Q33 d'autre part, pour en déduire, le cas échéant, un ordre de transfert intercellulaire.

Comme précédemment, on fait l'hypothèse que les mesures Q13ᵢ sont la réalisation d'une variable aléatoire dont la fonction de densité est normale, en sorte que l'indication Q13 est déterminée par une moyenne µ13 et écart-type σ13. Les mêmes hypothèses conduisent à considérer que l'indication Q23 est déterminée par une moyenne µ23 et écart-type σ23, et que l'indication Q33 est déterminée par une moyenne adjacente considérée µ33 et un écart-type σ33.

Compte tenu de ces hypothèses, l'étape de comparaison 600 peut conduire le réseau fixe à commander un transfert intercellulaire au profit de la cellule adjacente 20 si la moyenne µ23 est meilleure que la moyenne µ13, et si la différence entre ces deux moyennes est supérieure à une valeur d'hystérésis λ. Cela signifie en effet que la liaison radio entre la station mobile 60 et la station de base 21 de la cellule adjacente 20 est meilleure que celle entre la station mobile 60 et la station de base 11 de la cellule courante 10. Le canal de trafic 13 peut alors être désalloué.

Si à l'inverse la valeur moyenne µ1 est meilleure que la valeur moyenne µ2 et que la différence entre ces deux valeurs moyennes est supérieure à la valeur d'hystérésis λ, alors le canal de trafic 23 alloué à la communication dans la cellule adjacente 20 peut être désalloué. En effet, cela signifie que la liaison radio avec la station de base 11 reste meilleure que la liaison radio avec la station de base 21, en sorte qu'aucun transfert intercellulaire au profit de la cellule adjacente 20 ne doit être commandé.

Dans le cas intermédiaire, il ne se passe rien en sorte que la configuration du mécanisme de vote reste inchangée.

Les comparaisons ci-dessus étant également effectuées pour les autres cellules éligibles comme par exemple la cellule 30, il peut arriver que la première des conditions ci-dessus soit remplie pour plusieurs cellules éligibles simultanément. Dans ce cas, le transfert intercellulaire est commandé par le réseau fixe au profit de celle de ces cellules éligibles pour laquelle la valeur moyenne de l'indication relative à la qualité de la liaison radio avec la station mobile 60 est la meilleure.

Dans un second mode de réalisation, les canaux de trafic tels que 23 et 33 sont alloués par le réseau fixe, à l'étape respectivement 402 et 403, dans le sens montant et dans le sens descendant, sur une fréquence particulière, réservée à cet effet dans chaque cellule du réseau. Dans ce mode de réalisation, le réseau fixe alloue également, dans une étape 401, un canal de trafic spécifique 13' (figure 1) à la communication dans la cellule courante 10. Le canal de trafic 13' spécifique est alloué, dans le sens montant et dans le sens descendant, sur la même fréquence (dans le cas d'un système FDMA) et/ou sur le même intervalle de temps (dans le cas d'un système TDMA) que les canaux de trafic 23 et 33.

Les canaux de trafic 13, 23, 33, ... sont donc établis sur un canal physique commun (ressource radio) spécifiquement réservé dans chaque cellule à la mise en oeuvre des transferts intercellulaires.

La communication dans la cellule courante 10 est transférée sur le canal de trafic spécifique 13'. On obtient ainsi une configuration particulière du plan de fréquence, dite configuration « simulcast », incluant la cellule courante et les cellules éligibles 20 et 30.

Le canal de trafic 13 alloué à l'origine pour la communication dans la cellule courante peut alors être désalloué.

Les autres étapes du procédé sont identiques à ce qui a été décrit ci-dessous, en remplaçant, dans l'exposé correspondant, et à la figure 4, les références 13 et Q13 par les références 13' et Q13' respectivement.

Le premier mode de réalisation ci-dessus convient bien pour une mise en oeuvre du procédé dans une zone géographique relativement dense, par exemple en milieu urbain, dans laquelle les cellules sont de taille relativement petites (quelques centaines de mètres carrés). En effet, ce premier mode de réalisation ne nécessite pas la réservation de ressources radios spécifiques dans chaque cellule. En outre, il permet de compenser la différence de qualité de la liaison radio entre le sens montant et le sens descendant, due au fait que la puissance d'émission des stations mobiles, qui dans ce contexte sont en général des terminaux portatifs, et plus faible que celles des stations de base. Cette compensation provient du fait que les signaux reçus simultanément par les stations de base respectives de chacune des cellules de la configuration de vote, pour la communication considérée, contribuent à l'obtention d'une liaison dans le sens montant de meilleure qualité. Ainsi par exemple, si la configuration de vote comprend deux cellules éligibles, et si chacun des canaux de trafic dans le sens montant affecté à la communication dans ces cellules présente chacun un taux d'erreur sur les trames égal à 10%, alors le taux d'erreur sur les trames de la liaison montante dans la configuration de vote est égal à 10% x 10%, c'est-à-dire égal à 1 %.

Le second mode de réalisation présenté ci-dessus est quant à lui particulièrement bien adapté à la mise en oeuvre du procédé dans les zones géographiques dans lesquelles la densité de trafic est beaucoup plus faible et où, par conséquent, les cellules sont de taille relativement plus grande (quelques kilomètres carrés). Les stations mobiles rencontrées dans de telles zones sont plus souvent des terminaux mobiles embarqués à bord de véhicules automobiles, dont la puissance d'émission est plus élevée que celle des terminaux portatifs, en sorte que le bilan de liaison est mieux équilibré entre le sens montant et le sens descendant. Ce mode de réalisation présente en outre l'avantage, par rapport au premier mode de réalisation, de renforcer le niveau de puissance du signal radio-reçu par la station mobile pendant toute la phase intermédiaire du transfert intercellulaire. Ceci réduit le risque d'une perte de la liaison dans le sens descendant pendant cette phase. Par contre, il présente l'inconvénient de nécessiter la réservation dans chaque cellule de ressources radio spécifiquement dédiées à sa mise en oeuvre.

De manière avantageuse, dans le premier comme dans le second mode de réalisation, les commandes de contrôle de la puissance d'émission du terminal mobile, qui sont envoyées par le réseau fixe via les canaux de signalisation associés DT ou DL, tiennent compte des signaux radio qui sont simultanément reçus par les stations de base respectives de chacune des cellules appartenant à la configuration de vote ou à la configuration de simulcast respectivement. De cette manière, la puissance d'émission de la station mobile est plus faible, pendant la phase de transfert intercellulaire du procédé selon l'invention, qu'avec les procédés de transferts intercellulaires selon l'art antérieur. On limite ainsi les risques d'interférence dans les autres cellules du réseau dans lesquelles la même fréquence est réutilisée. Ceci permet donc d'augmenter le taux de réutilisation des fréquences et donc d'augmenter la capacité de trafic global du réseau. Le procédé selon l'invention permet donc de bénéficier de l'effet positif de l'hystérésis, qui limite le nombre de transferts intercellulaires, sans avoir à supporter son effet négatif, à savoir l'émission avec une puissance relativement élevée par une station mobile se trouvant en limite de cellules, qui est due au retard dans la prise de décision du transfert intercellulaire.

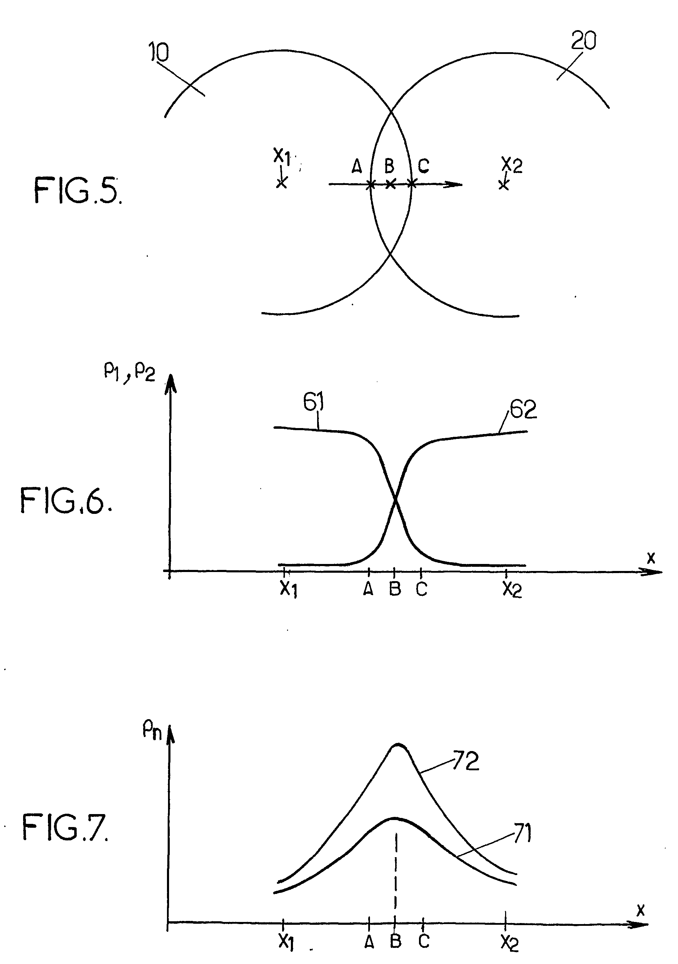

A la figure 5, on a représenté différentes positions A, B et C d'une station mobile se déplaçant de la cellule courante 10 vers la cellule adjacente 20. Les références X1 et X2 désignent l'emplacement des stations de base respectivement 11 et 21 des cellules respectivement 10 et 20. Le point A correspond à la limite de la cellule 20 de destination. Le point C correspond à la limite de la cellule d'origine 10; et le point B correspond sensiblement au milieu de la zone de recouvrement entre les cellules 10 et 20.

Sur le graphe de la figure 6, les courbes 61 et 62 montrent l'allure, en fonction de la position x de la station mobile 60 sur sa trajectoire, de la puissance radioélectrique respectivement P1 et P2 de la station mobile 60 telle qu'elle est reçue par les stations de base respectivement 11 et 21.

Comme on peut le voir sur cette figure, la puissance P1 diminue, par rapport à sa valeur au niveau du centre X1 de la cellule 10, à mesure que la station mobile 60 s'éloigne de celui-ci. A partir de la position A, la puissance P2 commence à être perceptible par la station de base 21 de la cellule de destination 20. A partir de la position B, la puissance P2 devient supérieure à la puissance P1. A partir de la position C, la puissance P1 devient trop faible pour être détectée par la station de base 11 de la cellule d'origine 10.

Pour faire le lien avec la description du procédé selon l'invention qui précède, on peut considérer, de manière schématique, que la configuration de vote ou la configuration simulcast sont générées par le réseau fixe pour les positions de la station mobile se trouvant entre la position A et la position C. C'est pendant la période de temps pendant laquelle la station mobile 60 se trouve entre ces positions A et C que le transfert intercellulaire a lieu, sensiblement lorsque la station mobile 60 se trouve dans la position B. Pendant toute cette période de temps, correspondant à la phase intermédiaire du procédé de transfert intercellulaire selon l'invention, la configuration de vote ou la configuration simulcast permettent d'éviter la perte de la communication. On obtient ainsi le transfert intercellulaire en douceur qui est recherché.

De plus, l'équipement de commutation 50 produisant une commande de contrôle de la puissance d'émission du terminal mobile qui prend en compte les signaux radio reçus par toutes les stations de base participant à la configuration de vote ou à la configuration simulcast, le niveau de la puissance d'émission PE du terminal mobile 60 est beaucoup plus faible, pendant la phase de transfert intercellulaire, qu'il ne le serait sans la mise en oeuvre du procédé selon l'invention. Le graphe de la figure 7 illustre de manière schématique cet avantage du procédé. Sur cette figure, les courbes 71 et 72 représentent l'allure de la puissance PE en fonction de la position x de la station mobile sur sa trajectoire, respectivement dans un système selon l'invention et dans un système selon l'art antérieur. Comme on peut le voir, la courbe 71 est en dessous de la courbe 72 entre les positions A et C, ce qui traduit le fait que le niveau de la puissance PE est inférieur pendant la phase de transfert intercellulaire du procédé selon l'invention, au niveau de la puissance PE qui serait atteint autrement.

L'invention propose en outre un système de radiocommunications avec les mobiles, notamment un système privé de radiocommunications professionnelles, comprenant des moyens pour la mise en oeuvre du procédé décrit ci-dessus. Ces moyens sont réalisés sous la forme de logiciels exécutés dans les stations mobiles et dans un équipement du réseau fixe du système, tel que l'équipement 50 du sous-système réseau qui est représenté sur le schéma de la figure 1. La réalisation de ces logiciels est à la portée d'un homme du métier et n'appelle pas de commentaire particulier dans la présente description. On peut en outre relever que le logiciel exécuté dans les stations mobiles pour la mise en oeuvre des étapes 101, 102, 103, ... et de l'étape 200 est identique à celui exécuté dans les stations mobiles des systèmes connus, puisque ces étapes sont déjà mises en oeuvre dans de telles stations mobiles.

## Revendications

1. Procédé de transfert intercellulaire d'une communication entre une station mobile (60) et un réseau fixe (11,21,31,41,50) d'un système de radiocommunications cellulaire FDMA et/ou TDMA, permettant de transférer la communication depuis la station de base (11) d'une cellule courante (10) vers la station de base (21) d'une cellule voisine (20), le procédé comprenant les étapes suivantes :
a) mesure (101), par la station mobile (60), d'une première indication relative à la qualité de la liaison radio entre la station mobile (60) et la station de base (11) de la cellule courante (10);
b) scrutation, par la station mobile (60) du canal balise d'au moins une cellule voisine (20) et mesure (102) correspondante d'une deuxième indication relative à la qualité de la liaison radio entre la station mobile (60) et la station de base (21) de ladite cellule voisine (20) ;
c) transmission (200) au réseau fixe, par la station mobile (60), des première et deuxième indications ;
d) première comparaison (300), par le réseau fixe (50), des première et deuxième indications pour en déduire, le cas échéant, au moins une cellule voisine (20) éligible pour le transfert intercellulaire;
e) allocation (402), par le réseau fixe (50), pour la communication dans la cellule éligible (20), d'un canal de trafic (23) au moins dans le sens montant, établi sur la même fréquence et/ou le même intervalle de temps qu'un canal de trafic (13, 13') dans le sens montant qui est alloué à la communication dans la cellule courante (10) ;
f) mesure (501), par le réseau fixe (50), d'une troisième indication (Q13, Q13') relative à la qualité de la liaison radio entre la station mobile (60) et la station de base (11) de la cellule courante (10) ;
g) mesure (502), par le réseau fixe (50), d'une quatrième indication (Q23) relative à la qualité de la liaison radio entre la station mobile (60) et la station de base (21) de la cellule éligible (20) ;
h) seconde comparaison (600), par le réseau fixe (50), des troisième (Q13, Q13') et quatrième (Q23) indications pour en déduire, le cas échéant, un ordre de transfert intercellulaire.

2. Procédé selon la revendication 1, suivant lequel, un canal de trafic déterminé (13) étant initialement alloué pour la communication dans la cellule courante (10), le canal de trafic (23) qui à l'étape e) est alloué pour la communication dans la cellule éligible (20), est alloué dans le sens montant seulement sur la même fréquence et/ou sur le même intervalle de temps que ledit canal de trafic déterminé (13) dans le sens montant qui est alloué à la communication dans la cellule courante (10).

3. Procédé selon la revendication 1, suivant lequel, le canal de trafic (23) qui, à l'étape e), est alloué à la communication dans la cellule éligible (20), est alloué à la fois dans le sens montant et dans le sens descendant, suivant lequel, à l'étape e), en outre, un canal de trafic spécifique (13') est alloué à la communication dans la cellule courante (10) à la fois dans le sens montant et dans le sens descendant, sur la même fréquence et/ou le même intervalle de temps que le canal correspondant (23) alloué à la communication dans la cellule éligible (20), et suivant lequel la communication dans la cellule courante (10) est transférée sur ce canal de trafic spécifique (13').

4. Procédé selon l'une quelconque des revendications précédentes, suivant lequel, après l'étape e), le réseau fixe transmet à la station mobile (60) une commande de contrôle de sa puissance d'émission en fonction du signal reçu par la station de base (11) de la cellule courante (10) et par la station de base (21) de la cellule éligible (20).

5. Système de radiocommunications cellulaire FDMA et/ou TDMA, comprenant au moins une station mobile (60) et un réseau fixe (11,21,31,41,50) avec un sous-système réseau comprenant un équipement de commutation (50) et un sous-système radio ayant une station de base (11,21,31,41) par cellule (10,20,30,40),
dans lequel la station mobile (60) comprend :
des moyens pour mesurer une première indication relative à la qualité de la liaison radio entre la station mobile (60) et la station de base (11) d'une cellule courante (10) ;
- des moyens pour scruter un canal balise d'au moins une cellule voisine (20) et pour mesurer une deuxième indication relative à la qualité de la liaison radio entre la station mobile (60) et la station de base (21) de ladite cellule voisine (20) :
- des moyens pour transmettre la première et la deuxième indications au réseau fixe ;
et dans lequel l'équipement de commutation (50) comprend :
- des premiers moyens de comparaison pour comparer la première et la deuxième indication pour en déduire, le cas échéant, au moins une cellule voisine (20) éligible pour le transfert intercellulaire ;
- des moyens pour allouer, pour la communication dans la cellule éligible (20), un canal de trafic (23) au moins dans le sens montant, établi sur la même fréquence et/ou le même intervalle de temps qu'un canal de trafic (13, 13') dans le sens montant qui est alloué à la communication dans la cellule courante (10) ;
- des moyens pour mesurer une troisième indication (Q13, Q13') relative à la qualité de la liaison radio entre la station mobile (60) et la station de base (11) de la cellule courante (10) ;
- des moyens pour mesurer une quatrième indication (Q23) relative à la qualité de la liaison radio entre la station mobile (60) et la station de base (21) de la cellule éligible (20) ;
- des seconds moyens de comparaison pour comparer la troisième (Q13, Q13') et la quatrième (Q23) indications pour en déduire, le cas échéant, un ordre de transfert intercellulaire pour transférer la communication depuis la station de base (11) de la cellule courante (10) vers la station de base (21) de la cellule éligible (20).

6. Système selon la revendication 5, dans lequel lesdits moyens pour allouer de l'équipement de commutation (50) sont adaptés pour allouer ledit canal de trafic (23) dans le sens montant seulement, sur la même fréquence et/ou sur le même intervalle de temps que ledit canal de trafic (13) dans le sens montant qui est alloué à la communication dans la cellule courante (10).

7. Système selon la revendication 5, dans lequel lesdits moyens pour allouer de l'équipement de commutation (50) sont adaptés pour allouer un canal de trafic spécifique (13') à la communication dans la cellule courante (10) à la fois dans le sens montant et dans le sens descendant, sur la même fréquence et/ou le même intervalle de temps que le canal correspondant (23) alloué à la communication dans la cellule éligible (20), et dans lequel l'équipement de commutation comprend en outre des moyens pour transférer la communication dans la cellule courante (10) sur ce canal de trafic spécifique (13').

8. Système selon l'une quelconque des revendications 5 à 7, dans lequel l'équipement de commutation (50) comprend des moyens pour produire une commande de contrôle de la puissance d'émission de la station mobile (60) prenant en compte le signal reçu par la station de base (11) de la cellule courante (10) et celui reçu par là station de base (21) de la cellule éligible (20).

9. Equipement de commutation (50) destiné à être utilisé dans un système selon l'une quelconque des revendications 5 à 8, comprenant :
- des premiers moyens de comparaison pour comparer la première et la deuxième indication pour en déduire, le cas échéant, au moins une cellule voisine (20) éligible pour le transfert intercellulaire ;
- des moyens pour allouer, pour la communication dans la cellule éligible (20), un canal de trafic au moins dans le sens montant, établi sur la même fréquence et/ou le même intervalle de temps qu'un canal de trafic dans le sens montant qui est alloué à la communication dans la cellule courante (10) ;
- des moyens pour mesurer une troisième indication (Q13) relative à la qualité de la liaison radio entre la station mobile (60) et la station de base (11) de la cellule courante (10) ;
- des moyens pour mesurer une quatrième indication (Q23) relative à la qualité de la liaison radio entre la station mobile (60) et la station de base (21) de la cellule éligible (20) ;
- des seconds moyens de comparaison pour comparer la troisième (Q13) et la quatrième (Q23) indications pour en déduire, le cas échéant, un ordre de transfert intercellulaire pour transférer la communication depuis la station de base (11) de la cellule courante (10) vers la station de base (21) de la cellule éligible (20).

10. Equipement de commutation (50) selon la revendication 9, dans lequel lesdits moyens pour allouer sont adaptés pour allouer ledit canal de trafic (23) dans le sens montant seulement, sur la même fréquence et/ou sur le même intervalle de temps que ledit canal de trafic (13) dans le sens montant qui est alloué à la communication dans la cellule courante (10).

11. Equipement de commutation (50) selon la revendication 9, dans lequel lesdits moyens pour allouer sont adaptés pour allouer un canal de trafic spécifique (13') à la communication dans la cellule courante (10) à la fois dans le sens montant et dans le sens descendant, sur la même fréquence et/ou le même intervalle de temps que le canal correspondant (23) alloué à la communication dans la cellule éligible (20), l'équipement de commutation comprenant en outre des moyens pour transférer la communication dans la cellule courante (10) sur ce canal de trafic spécifique (13').

12. Equipement de commutation (50) selon l'une quelconque des revendications 9 à 11, comprenant en outre des moyens pour produire une commande de contrôle de la puissance d'émission de la station mobile (60) prenant en compte le signal reçu par la station de base (11) de la cellule courante (10) et celui reçu par la station de base (21) de la cellule éligible (20).

## Patentansprüche

1. Verfahren zum interzellularen Übergeben einer Kommunikation zwischen einer mobilen Station (60) und einem festen Netz (11, 21, 31, 41, 50) eines funkgestützten zellularen FDMA- und / oder TDMA-Kommunikationssystems, welches es erlaubt, die Kommunikation von der Basisstation (11) einer gegenwärtigen Zelle (10) zu der Basisstation (21) einer Nachbarzelle (20) zu übertragen, wobei das Verfahren die folgenden Schritte aufweist:
a) Messen (101), durch die mobile Station (60), einer ersten Kenngröße für die Qualität der Funkverbindung zwischen der mobilen Station (60) und der Basisstation (11) der gegenwärtigen Zelle (10);
b) Abfragen, durch die mobile Station (60), eines Zustands des Signalisierungskanals wenigstens einer Nachbarzelle (20) und entsprechendes Messen (102) einer zweiten Kenngröße für die Qualität der Funkverbindung zwischen der mobilen Station (60) und der Basisstation (21) der Nachbarzelle (20);
c) Übertragen (200) der ersten und zweiten Kenngrößen zu dem festen Netz durch die mobile Station (60);
d) erstes Vergleichen (300) der ersten und zweiten Kenngrößen durch das feste Netz (50), um daraus gegebenenfalls wenigstens eine Nachbarzelle (20) abzuleiten, die für die interzellulare Übergabe auswählbar ist;
e) Zuweisen (402) eines Verkehrskanals (23) wenigstens in der Aufwärtsrichtung für die Kommunikation in der auswählbaren Zelle (20) durch das feste Netz (50), wobei der Verkehrskanal auf derselben Frequenz und / oder demselben Zeitintervall basiert wie ein Verkehrskanal (13, 13') in der Aufwärtsrichtung, welcher der Kommunikation in der gegenwärtigen Zelle (10) zugewiesen ist;
f) Messen (501), durch das feste Netz (50), einer dritten Kenngröße (Q13, Q13') für die Qualität der Funkverbindung zwischen der mobilen Station (60) und der Basisstation (11) der gegenwärtigen Zelle (10);
g) Messen (502), durch das feste Netz (50), einer vierten Kenngröße (Q23) für die Qualität der Funkverbindung zwischen der mobilen Station (60) und der Basisstation (21) der auswählbaren Zelle (20);
h) zweites Vergleichen (600), durch das feste Netz (50), der dritten (Q13, Q13') und vierten (Q23) Kenngrößen, um daraus gegebenenfalls eine Anweisung zur interzellularen Übergabe abzuleiten.

2. Verfahren nach Anspruch 1, **dadurch gekennzeichnet, dass** bei anfänglicher Zuweisung eines bestimmten Verkehrskanals (13) für die Kommunikation in der gegenwärtigen Zelle (10) derjenige Verkehrskanal (23), der in Schritt e) für die Kommunikation in der auswählbaren Zelle (20) zugewiesen wird, in der Aufwärtsrichtung nur auf derselben Frequenz und / oder auf demselben Zeitintervall zugewiesen wird wie der bestimmte Verkehrskanal (13) in der Aufwärtsrichtung, der für die Kommunikation in der gegenwärtigen Zelle (10) zugewiesen ist.

3. Verfahren nach Anspruch 1, **dadurch gekennzeichnet, dass** der Verkehrskanal (23), der in Schritt e) für die Kommunikation in der auswählbaren Zelle (20) zugewiesen wird, gleichzeitig in der Aufwärtsrichtung und in der Abwärtsrichtung zugewiesen wird und dass weiterhin in Schritt e) ein spezifischer Verkehrskanal (13') für die Kommunikation in der gegenwärtigen Zelle (10) sowohl in der Abwärtsrichtung als auch in der Aufwärtsrichtung auf derselben Frequenz und / oder demselben Zeitintervall wie der entsprechende Kanal (23) zugewiesen wird, der für die Kommunikation in der auswählbaren Zelle (20) zugewiesen ist, und dass die Kommunikation in der gegenwärtigen Zelle (10) auf den spezifischen Verkehrskanal (13') übertragen wird.

4. Verfahren nach einem der vorangehenden Ansprüche, **dadurch gekennzeichnet, dass** im Anschluss an Schritt e) das feste Netz an die mobile Station (60) in Abhängigkeit von dem durch die Basisstation (11) der gegenwärtigen Zelle (10) und durch die Basisstation (21) der auswählbaren Zelle (20) empfangenen Signal einen Steuerbefehl für ihre Sendeleistung sendet.

5. Funkgestütztes zellulares FDMA- und / oder TDMA-Kommunikationssystem, aufweisend wenigstens eine mobile Station (60) und ein festes Netz (11, 21, 31, 41, 50) mit einem Netz-Untersystem, das eine Umschalteinrichtung (50) aufweist, und mit einem Funk-Untersystem, das eine Basisstation (11, 21, 31, 41) pro Zelle (14, 20, 30, 40) besitzt,
wobei die mobile Station (60) aufweist:
- Mittel zum Messen einer ersten Kenngröße für die Qualität der Funkverbindung zwischen der mobilen Station (60) und der Basisstation (11) einer gegenwärtigen Zelle (10);
- Mittel zum Abfragen eines Signalisierungskanals wenigstens einer Nachbarzelle (20) und zum Messen einer zweiten Kenngröße für die Qualität der Funkverbindung zwischen der mobilen Station (60) und der Basisstation (21) der Nachbarzelle (20);
- Mittel zum Übertragen der ersten und zweiten Kenngrößen an das feste Netz;
und wobei die Umschalteinrichtung (50) aufweist:
- erste Vergleichsmittel zum Vergleichen der ersten und zweiten Kenngrößen, um daraus gegebenenfalls wenigstens eine Nachbarzelle (20) abzuleiten, die für die interzellulare Übergabe auswählbar ist;
- Mittel zum Zuweisen eines Verkehrskanals (23) wenigstens in der Aufwärtsrichtung für die Kommunikation in der auswählbaren Zelle (20), der auf derselben Frequenz und / oder demselben Zeitintervall eingerichtet ist, wie ein Verkehrskanal (13, 13') in der Aufwärtsrichtung, der für die Kommunikation in der gegenwärtigen Zelle (10) zugewiesen ist;
- Mittel zum Messen einer dritten Kenngröße (Q13, Q13') für die Qualität der Funkverbindung zwischen der mobilen Station (60) und der Basisstation (11) der gegenwärtigen Zelle (10);
- Mittel zum Messen einer vierten Kenngröße (Q23) für die Qualität der Funkverbindung zwischen der mobilen Station (60) und der Basisstation (21) der auswählbaren Zelle (20);
- zweite Vergleichsmittel zum Vergleichen der dritten (Q13, Q13') und der vierten (Q23) Kenngrößen, um daraus gegebenenfalls eine Anweisung für die interzellulare Übergabe abzuleiten, um die Kommunikation von der Basisstation (11) der gegenwärtigen Zelle (10) an die Basisstation (21) der auswählbaren Zelle (20) zu übergeben.

6. System nach Anspruch 5, **dadurch gekennzeichnet, dass** die Zuweisemittel der Umschalteinrichtung (50) zum Zuweisen des Verkehrskanals (23) nur in der Aufwärtsrichtung und auf der Frequenz und / oder auf dem Zeitintervall desjenigen Verkehrskanal (13) in der Aufwärtsrichtung ausgebildet sind, der für die Kommunikation in der gegenwärtigen Zelle (10) zugewiesen ist.

7. System nach Anspruch 5, **dadurch gekennzeichnet, dass** die Zuweisemittel der Umschalteinrichtung (50) zum Zuweisen eines spezifischen Verkehrskanals (13') für die Kommunikation in der gegenwärtigen Zelle (10) sowohl in der Aufwärtsrichtung als auch in der Abwärtsrichtung und auf der Frequenz und / oder dem Zeitintervall des zugehörigen, für die Kommunikation in der auswählbaren Zelle (20) zugewiesenen Kanals (23) ausgebildet sind und dass die Umschalteinrichtung weiterhin Mittel zum Übergeben der Kommunikation in der gegenwärtigen Zelle (10) auf den spezifischen Verkehrskanal (13') aufweist.

8. System nach einem der Ansprüche 5 bis 7, **dadurch gekennzeichnet, dass** die Umschalteinrichtung (50) Mittel zum Erzeugen eines Steuerbefehls für die Sendeleistung der mobilen Station (60) aufweist, welche das von der Basisstation (11) der gegenwärtigen Zelle (10) und das von der Basisstation (21) der auswählbaren Zelle (20) empfangene Signal berücksichtigen.

9. Umschalteinrichtung (50) zur Verwendung in einem System nach einem der Ansprüche 5 bis 8, aufweisend:
- erste Vergleichsmittel zum Vergleichen der ersten und zweiten Kenngrößen, um daraus gegebenenfalls wenigstens eine Nachbarzelle (20) abzuleiten, die für die interzellulare Übergabe auswählbar ist;
- Mittel zum Zuweisen eines Verkehrskanals wenigstens in der Aufwärtsrichtung für die Kommunikation in der auswählbaren Zelle (20), der auf derselben Frequenz und / oder demselben Zeitintervall basiert, wie ein Verkehrskanal in der Aufwärtsrichtung, der für die Kommunikation in der gegenwärtigen Zelle (10) zugewiesen ist;
- Mittel zum Messen einer dritten Kenngröße (Q13) für die Qualität der Funkverbindung zwischen der mobilen Station (60) und der Basisstation (11) der gegenwärtigen Zelle (10);
- Mittel zum Messen einer vierten Kenngröße (Q23) für die Qualität der Funkverbindung zwischen der mobilen Station (60) und der Basisstation (21) der auswählbaren Zelle (20);
- zweite Vergleichsmittel zum Vergleichen der dritten (Q13) und der vierten (Q23) Kenngrößen, um daraus gegebenenfalls eine Anweisung für die interzellulare Übergabe abzuleiten, um die Kommunikation von der Basisstation (11) der gegenwärtigen Zelle (10) an die Basisstation (21) der auswählbaren Zelle (20) zu übergeben.

10. Umschalteinrichtung (50) nach Anspruch 9, **dadurch gekennzeichnet, dass** die Zuweisemittel zum Zuweisen des Verkehrskanals (23) nur in der Aufwärtsrichtung und auf der Frequenz und / oder auf dem Zeitintervall desjenigen Verkehrskanals (13) in der Aufwärtsrichtung ausgebildet sind, der für die Kommunikation in der gegenwärtigen Zelle (10) zugewiesen ist.

11. Umschalteinrichtung (50) nach Anspruch 9, **dadurch gekennzeichnet, dass** die Zuweisemittel zum Zuweisen eines spezifischen Verkehrskanals (13') für die Kommunikation der gegenwärtigen Zelle (10) sowohl in der Aufwärtsrichtung als auch in der Abwärtsrichtung und auf der Frequenz und / oder dem Zeitintervall des zugehörigen, für die Kommunikation in der auswählbaren Zelle (20) zugewiesenen Kanals (23) ausgebildet sind und dass die Umschalteinrichtung weiterhin Mittel zum Übergeben der Kommunikation in der gegenwärtigen Zelle (10) auf den spezifischen Verkehrskanal (13') aufweist.

12. Umschalteinrichtung (50) nach einem der Ansprüche 9 bis 11, **gekennzeichnet durch** Mittel zum Erzeugen eines Steuerbefehls für die Sendeleistung der mobilen Station (60), welche das von der Basisstation (11) der gegenwärtigen Zelle (10) und das **durch** die Basisstation (21) der auswählbaren Zelle (20) empfangene Signal berücksichtigen.

## Claims

1. A method of intercell handover of a call between a mobile station (60) and a fixed network (11, 21, 31, 41, 50) of an FDMA and/or TDMA cellular radiocommunication system, for handing over the call from the base station (11) of a current cell (10) to the base station (21) of a neighboring cell (20), the method comprising the following steps:
a) determination (101), by the mobile station (60), of a first indication relative to the quality of the radio link between the mobile station (60) and the base station (11) of the current cell (10);
b) scan, by the mobile station (60) of the broadcast control channel of at least one neighboring cell (20) and corresponding determination (102) of a second indication relative to the quality of the radio link between the mobile station (60) and the base station (21) of said neighboring cell (20);
c) transmission (200) to the fixed network, by the mobile station (60), of the first and second indications;
d) a first comparison (300), by the fixed network (50), of the first and second indications in order to deduce therefrom, where necessary, at least one neighboring cell (20) that is eligible for the intercell handover;
e) allocation (402), by the fixed network (50), for the call in the eligible cell (20), of a traffic channel (23), at least in the uplink direction, set up at the same frequency and/or the same time slot as a traffic channel (13, 13') in the uplink direction which is allocated to the call in the current cell (10);
f) determination (501), by the fixed network (50), of a third indication (Q13, Q13') relative to the quality of the radio link between the mobile station (60) and the base station (11) of the current cell (10);
g) determination (502), by the fixed network (50), of a fourth indication (Q23) relative to the quality of the radio link between the mobile station (60) and the base station (21) of the eligible cell (20);
h) a second comparison (600), by the fixed network (50), of the third (Q13, Q13') and fourth (Q23) indications in order to deduce therefrom, where necessary, an order of intercell handover.

2. The method as claimed in Claim 1, wherein, a determined traffic channel (13) being initially allocated for the call in the current cell (10), the traffic channel (23) which at step e) is allocated for the call in the eligible cell (20) is allocated in the uplink direction only at the same frequency and/or in the same time slot as said determined traffic channel (13) in the uplink direction that is allocated to the call in the current cell (10).

3. The method as claimed in Claim 1, in which method the traffic channel (23) which, at step e), is allocated to the call in the eligible cell (20), is allocated both in the uplink direction and in the downlink direction, in which method, at step e), in addition, a specific traffic channel (13') is allocated to the call in the current cell (10) both in the uplink direction and in the downlink direction, at the same frequency and/or the same time slot as the corresponding channel (23) allocated to the call in the eligible cell (20), and in which method the call in the current cell (10) is handed over to this specific traffic channel (13').

4. The method as claimed in any one of the preceding claims, in which, after step e), the fixed network transmits to the mobile station (60) a command for controlling its transmit power according to the signal received by the base station (11) of the current cell (10) and by the base station (21) of the eligible cell (20).

5. An FDMA and/or TDMA cellular radiocommunication system, comprising at least one mobile station (60) and a fixed network (11, 21, 31, 41, 50) with a network subsystem comprising switching equipment (50) and a radio subsystem having one base station (11, 21, 31, 41) per cell (10, 20, 30, 40),
wherein the mobile station (60) includes:
- means for determining a first indication relative to the quality of the radio link between the mobile station (60) and the base station (11) of a current cell (10);
- means for scanning a broadcast control channel of at least one neighboring cell (20) and for determining a second indication relative to the quality of the radio link between the mobile station (60) and the base station (21) of said neighboring cell (20);
- means for transmitting the first and second indications to the fixed network;
and in which system the switching equipment (50) includes:
- first comparison means for comparing the first and second indications in order to deduce therefrom, where necessary, at least one neighboring cell (20) that is eligible for the intercell handover;
- means for allocating, for the call in the eligible cell (20), a traffic channel (23), at least in the uplink direction, set up at the same frequency and/or the same time slot as a traffic channel (13, 13') in the uplink direction that is allocated to the call in the current cell (10);
- means for determining a third indication (Q13, Q13') relative to the quality of the radio link between the mobile station (60) and the base station (11) of the current cell (10);
- means for determining a fourth indication (Q23) relative to the quality of the radio link between the mobile station (60) and the base station (21) of the eligible cell (20);
- second comparison means for comparing the third (Q13, Q13') and fourth (Q23) indications in order to deduce therefrom, where necessary, an order of intercell handover for handing over the call from the base station (11) of the current cell (10) to the base station (21) of the eligible cell (20).

6. The system as claimed in Claim 5, wherein said means for allocating, of the switching equipment (50), are designed to allocate said traffic channel (23) in the uplink direction only, at the same frequency and/or in the same time slot as said traffic channel (13) in the uplink direction that is allocated to the call in the current cell (10).

7. The system as claimed in Claim 5, wherein said means for allocating, of the switching equipment (50), are designed to allocate a specific traffic channel (13') to the call in the current cell (10) both in the uplink direction and in the downlink direction, at the same frequency and/or the same time slot as the corresponding channel (23) allocated to the call in the eligible cell (20), and in which the switching equipment additionally includes means for handing over the call in the current cell (10) to this specific traffic channel (13').

8. The system as claimed in any one of Claims 5 to 7, wherein the switching equipment (50) includes means for producing a command for controlling the transmit power of the mobile station (60) by considering the signal received by the base station (11) of the current cell (10) and that received by the base station (21) of the eligible cell (20).

9. Switching equipment (50) intended to be used in a system as claimed in any one of Claims 5 to 8, including:
- first comparison means for comparing the first and second indications in order to deduce therefrom, where necessary, at least one neighboring cell (20) that is eligible for the intercell handover;
- means for allocating, for the call in the eligible cell (20), a traffic channel, at least in the uplink direction, set up at the same frequency and/or the same time slot as a traffic channel in the uplink direction that is allocated to the call in the current cell (10);
- means for determining a third indication (Q13) relative to the quality of the radio link between the mobile station (60) and the base station (11) of the current cell (10);
- means for determining a fourth indication (Q23) relative to the quality of the radio link between the mobile station (60) and the base station (21) of the eligible cell (20);
- second comparison means for comparing the third (Q13) and fourth (Q23) indications in order to deduce therefrom, where necessary, an order of intercell handover for handing over the call from the base station (11) of the current cell (10) to the base station (21) of the eligible cell (20).

10. The switching equipment (50) as claimed in Claim 9, in which said means for allocating are designed to allocate said traffic channel (23) in the uplink direction only, at the same frequency and/or in the same time slot as said traffic channel (13) in the uplink direction that is allocated to the call in the current cell (10).

11. The switching equipment (50) as claimed in Claim 9, in which said means for allocating are designed to allocate a specific traffic channel (13') to the call in the current cell (10) both in the uplink direction and in the downlink direction, at the same frequency and/or the same time slot as the corresponding channel (23) allocated to the call in the eligible cell (20), the switching equipment additionally including means for handing over the call in the current cell (10) to this specific traffic channel (13').

12. The switching equipment (50) as claimed in any one of Claims 9 to 11, additionally including means for producing a command for checking the transmit power of the mobile station (60) by considering the signal received by the base station (11) of the current cell (10) and that received by the base station (21) of the eligible cell (20).
